# EUROPÄISCHE PATENTANMELDUNG

(11) **EP 0 908 335 A1**
(43) Veröffentlichungstag der Anmeldung: **14.04.1999**
(21) Anmeldenummer: 98113554.4
(22) Anmeldetag: 21.07.1998
(51) Int. Cl.: B60G 17/015, B60G 17/052, F15B 21/04

(54) **Niveauregeleinrichtung für Fahrzeuge mit Luftfedern**

(30) Priorität: 13.10.1997 DE 19745195
(71) Anmelder: Continental Aktiengesellschaft, 30165 Hannover (DE)
(72) Erfinder: Westerkamp, Helge, 30171 Hannover (DE); Folchert, Uwe, Dr., 30989 Gehrden (DE); Job, Heinz, 30826 Garbsen (DE)

(57) **Zusammenfassung**

Die Erfindung betrifft eine Niveauregeleinrichtung für Fahrzeuge mit Luftfedern 8, durch die ein Fahrzeugaufbau gegenüber mindestens einer Fahrzeugachse abgefedert ist. Zwischen dem Kompressor 4 und dem Lufttrockner 6 ist ein pneumatisch steuerbares Wegeventil 18 angeordnet, daß zwei Steuereingänge 20 und 22 aufweist. Im Grundzustand der Niveauregeleinrichtung ist der Kompressor 4 über das pneumatisch steuerbare Wegeventil 18 mit dem Lufttrockner 6 verbunden. Wenn die Steuerleitung 26 des ersten Steuereingangs 20 über ein steuerbares Wegeventil 30 mit der Atmosphäre verbunden wird, geht das pneumatisch steuerbare Wegeventil 18 in den anderen Schaltzustand über und die Luftfeder 8 kann über den Lufttrockner 6 entleert werden. Das pneumatisch steuerbare Wegeventil 18 erlaubt es, große Strömungsquerschnitte zu schalten, so daß der Lufttrockner 6 beim Entleeren der Luftfeder 8 schnell entleert werden kann und eine Regenerierung des Lufttrockners 6 somit besonders gut möglich ist.

## Beschreibung

Die Erfindung betrifft eine Niveauregeleinrichtung für Fahrzeuge mit Luftfedern, durch die ein Fahrzeugaufbau gegenüber mindestens einer Federachse abgefedert ist, wobei
- jede Luftfeder zum Auffüllen über einen Lufttrockner mit einer Druckluftquelle verbindbar ist,
- jede Luftfeder zum Entleeren über den Lufttrockner mit der Atmosphäre verbindbar ist.

Eine derartige Niveauregeleinrichtung für Fahrzeuge mit Luftfedern ist beispielsweise aus der US-PS 44 64 297 bekannt. Zum Auffüllen der Luftfeder wird diese über einen Lufttrockner, ein Rückschlagventil und ein elektrisch ansteuerbares erstes Wegeventil mit einer Druckluftquelle verbunden, wobei der Lufttrockner beim Auffüllen der Luftfeder im Trocknungsbetrieb betrieben wird. Beim Entleeren der Luftfeder wird diese über das erste elektrisch ansteuerbare Wegeventil, eine Drossel, den Lufttrockner und über ein zweites elektrisch ansteuerbares Wegeventil mit der Atmosphäre verbunden, wobei beim Entleeren der Luftfeder der Lufttrockner im Regenerationsbetrieb betrieben wird.

Für eine Regenerierung des Lufttrockners, die für eine einwandfreie Funktionstüchtigkeit der Niveauregeleinrichtung wichtig ist, ist es notwendig, daß der Lufttrockner im Regenerationsbetrieb schnell entlüftet wird. Dies ist bei der aus der US-PS 44 65 297 bekannten Niveauregeleinrichtung nicht möglich, da die Luft aus dem Lufttrockner im Regenerationsbetrieb über ein elektrisch ansteuerbares Regelventil entweicht, an dem nur kleine Querschnitte geschaltet werden können.

Der Erfindung liegt die Aufgabe zugrunde, eine Niveauregeleinrichtung für Fahrzeuge mit Luftfedern zu schaffen, bei der im Regenerationsbetrieb eine gute Regenerierung des Lufttrockners möglich ist.

Gemäß den kennzeichnenden Merkmalen des Anspruchs 1 wird die Aufgabe dadurch gelöst, daß
- ein pneumatisch steuerbares Wegeventil vorhanden ist, das einen ersten oder einen zweiten Schaltzustand einnehmen kann, wobei es in dem zweiten Schaltzustand die Atmosphäre mit dem Lufttrockner verbindet und
- das pneumatisch steuerbare Wegeventil einen ersten und einen zweiten Steuereingang aufweist, die jeweils über eine Steuerleitung mit einer druckbeaufschlagbaren Leitung verbunden sind, wobei das pneumatisch steuerbare Wegeventil mit einer Rückstellfeder beaufschlagt ist, die das pneumatisch steuerbare Wegeventil bei Druckgleichheit in den Steuerleitungen in dem ersten Schaltzustand fixiert und
- die Steuerleitung des ersten Steuereingangs mit der Atmosphäre verbindbar ist, wobei das pneumatisch steuerbare Wegeventil in den zweiten Schaltzustand übergeht, wenn die Steuerleitung mit der Atmosphäre verbunden ist.

Die mit der Erfindung erzielten Vorteile sind insbesondere darin zu sehen, daß mit dem pneumatisch steuerbaren Wegeventil große Querschnitte schaltbar sind, so daß ein schnelles Entlüften des Lufttrockners über das pneumatisch steuerbare Wegeventil möglich ist. Damit ist auch bei ungünstigen Betriebsbedingungen, in denen im Lufttrockner eine hohe Luftfeuchtigkeit herrscht, eine optimale Regeneration des Lufttrockners gewährleistet. Ein weiterer Vorteil der Erfindung ist darin zu sehen, daß die Niveauregeleinrichtung einfach aufgebaut ist. So bedarf es außer dem pneumatisch steuerbaren Wegeventil und einem steuerbaren weiteren Wegeventil, mit der die Steuerleitung des ersten Steuereingangs des pneumatisch steuerbaren Wegeventils mit der Atmosphäre verbindbar ist, keiner weiteren steuerbaren Wegeventile.

Gemäß einem ersten Ausführungsbeispiel der Erfindung ist das pneumatisch steuerbare Wegeventil zwischen der Druckluftquelle und dem Lufttrockner angeordnet, und verbindet in dem ersten Schaltzustand die Druckluftquelle mit dem Lufttrockner und in dem zweiten Schaltzustand die Atmosphäre mit dem Lufttrockner.

Aus der nachveröffentlichten deutschen Patentanmeldung mit dem Aktenzeichen 197 24 747.4 ist zwar ebenfalls eine Niveauregeleinrichtung bekannt, die ein pneumatisch steuerbares Wegeventil zwischen der Druckluftquelle und dem Lufttrockner aufweist, das in einem ersten Schaltzustand die Druckluftquelle mit dem Lufttrockner verbindet und in einem zweiten Schaltzustand die Atmosphäre mit dem Lufttrockner verbindet. Das pneumatisch steuerbare Wegeventil weist jedoch nur eine Steuerleitung auf.

Gemäß einem zweiten Ausführungsbeispiel der Erfindung überbrückt die druckbeaufschlagbare Leitung, in der das pneumatisch steuerbare Wegeventil angeordnet ist, den Lufttrockner, d. h., die druckbeaufschlagbare Leitung zweigt zwischen der Druckluftquelle und dem Lufttrockner ab und endet hinter dem Lufttrockner wieder auf einer Leitung, die zu den Luftfedern führt. Der Vorteil dieses Ausführungsbeispiels ist darin zu sehen, daß beim Befüllen der Luftfedern die Luft direkt von der Druckluftquelle in den Lufttrockner gelangt, und nicht, wie beim ersten Ausführungsbeispiel, über das pneumatisch steuerbare Wegeventil geführt wird. Über das pneumatisch steuerbare Wegeventil wird nur Luft aus den Luftfedern beim Ablassen in die Atmosphäre geführt, nachdem diese zuvor den Lufttrockner passiert hat. Bei dem zweiten Ausführungsbeispiel gelangt also keine feuchte Luft in das pneumatisch steuerbare Wegeventil, so daß die Gefahr der Vereisung des Ventils reduziert ist. Darüber hinaus weist die Niveauregeleinrichtung gemäß dem zweiten Aufbau einen einfacheren konstruktiven Aufbau auf.

Gemäß einer Weiterbildung der Erfindung nach Anspruch 4 ist die Steuerleitung des ersten Steuereingangs über ein steuerbares 3/2-Wegeventil in einer ersten Schaltstellung mit der Atmosphäre bzw. in einer zweiten Schaltstellung mit der druckbeaufschlagbaren Leitung verbindbar.

Gemäß einer alternativen Weiterbildung der Erfindung nach Anspruch 5 weist die Steuerleitung des ersten Steuereingangs zwei Teile auf, von denen der erste Teil auf den ersten Steuereingang führt und über ein steuerbares 2/2-Wegeventil direkt mit der Atmosphäre verbindbar ist und der zweite Teil über eine Drossel mit der druckbeaufschlagten Leitung verbindbar ist. Der Vorteil dieses Ausführungsbeispiels ist darin zu sehen, daß in der Niveauregeleinrichtung nur einfach konstruierte Bestandteile verwendet werden, und eine Niveauregeleinrichtung gemäß Anspruch 3 deshalb besonders kostengünstig herzustellen ist.

Gemäß einer weiteren Weiterbildung der Erfindung nach Anspruch 6 ist zwischen der Luftfeder und dem Lufttrockner ein Restdruckhalteventil angeordnet, über das die Luftfeder zum Entleeren mit dem Lufttrockner verbunden wird. Vorzugsweise ist das Restdruckhalteventil als regelbares Restdruckhalteventil ausgebildet. Der Vorteil dieser Weiterbildung ist darin zu sehen, daß bei der Entleerung eine Luftfeder nicht unterhalb eines vorgegebenen Restdrucks entleert wird. Dies ist beispielsweise wichtig, wenn das Fahrzeug mittels einer Hebebühne angehoben wird.

Gemäß einer weiteren Weiterbildung der Erfindung nach Anspruch 7 verbindet die druckbeaufschlagte Leitung, auf die die freien Enden der Steuerleitung führen, den Lufttrockner mit dem pneumatisch steuerbaren Wegeventil. In diesem Fall werden die Steuereingänge des pneumatisch steuerbaren Ventils im Grundzustand der Niveauregeleinrichtung mit dem Luftdruck beaufschlagt, der am der Druckluftquelle zugewandten Eingang des Lufttrockners anliegt. Der Vorteil dieser Weiterbildung ist darin zu sehen, daß eine kompakte Bauweise möglich ist. Insbesondere ist es möglich, die Steuerleitungen in das pneumatisch steuerbare Wegeventil zu integrieren.

Ein Ausführungsbeispiel und weitere Vorteile der Erfindung werden im Zusammenhang mit den nachstehenden Figuren erläutert, darin zeigt:
Fig. 1 eine Niveauregeleinrichtung in schematischer Darstellung,
Fig. 2 eine Niveauregeleinrichtung in schematischer Darstellung,
Fig. 3 eine Niveauregeleinrichtung in schematischer Darstellung.
Fig. 4 eine Niveauregeleinrichtung in schematischer Darstellung.

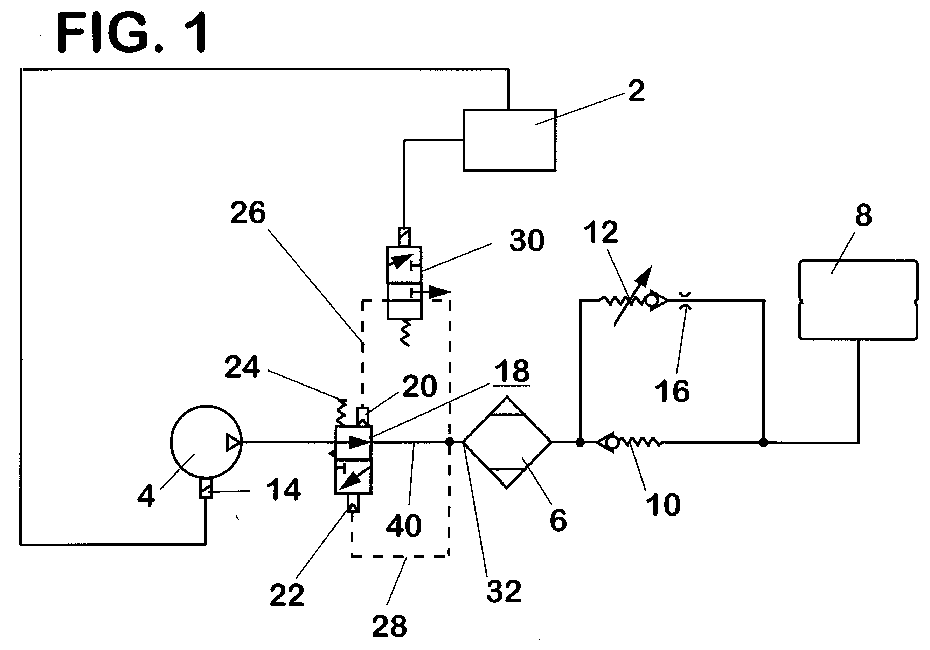

Figur 1 zeigt in schematischer Darstellung eine Niveauregeleinrichtung für ein Fahrzeug mit Luftfedern 8, wobei die steuerbaren Wegeventile 18 und 30 so geschaltet sind, daß sich die Niveauregeleinrichtung im Grundzustand (in der Beschreibungseinleitung als erster Schaltzustand bezeichnet) befindet (d. h. die Luftfedern 8 werden weder gefüllt noch entleert). Im Grundzustand liegt an den Steuereingängen 20 und 22 der gleiche Luftdruck an, der an sich von einer beliebigen Quelle bereitgestellt werden kann. Bevorzugt werden die freien Enden der Steuerleitungen 26 und 28 jedoch mit der druckbeaufschlagten Leitung 40 zwischen dem pneumatisch steuerbaren Wegeventil 18 und dem Lufttrockner 6 verbunden, so daß die Steuereingänge 20 und 22 im Grundzustand dann mit dem Luftdruck beaufschlagt werden, der am dem Kompressor 4 zugewandten Eingang 32 des Lufttrockners 6 anliegt. Das pneumatisch steuerbare Wegeventil 18 wird durch die Rückstellfeder 24 stabil im Grundzustand fixiert. In dem gezeigten Ausführungsbeispiel wird das pneumatisch steuerbare Wegeventil 18 auf der Seite des Steuereingangs 20 durch die Rückstellfeder 24 beaufschlagt, es ist aber ebenfalls möglich, es auf der Seite des Steuereingangs 22 durch die Rückstellfeder 24 zu beaufschlagen.

Soll die Luftfeder 8 gefüllt werden, so schickt die Steuereinheit 2 ein Steuersignal an den Steuereingang 14 des Kompressors 4, woraufhin dieser anfängt zu laufen. Die Luftfeder 8 wird dann über das pneumatisch steuerbare Wegeventil 18, den Lufttrockner 6 und das Rückschlagventil 10 aufgefüllt. Hierbei läuft der Lufttrockner 6 im Trocknungsbetrieb. Soll der Auffüllvorgang beendet werden, so ergeht wiederum ein Signal von der Steuereinheit 2 an den Steuereingang 14 des Kompressors 4, woraufhin dieser aufhört zu laufen. Beim Befüllen der Luftfeder 8 nehmen die steuerbaren Wegeventile 18 und 30 dieselbe Stellung wie im Grundzustand ein.

Soll die Luftfeder 8 entleert werden, so wird durch die Steuereinheit 2 der Steuereingang des elektrisch steuerbaren 3/2-Wegeventils angesteuert, so daß dieses von dem in der Figur 1 gezeigten Schaltzustand in den anderen Schaltzustand übergeht. Dies Steuerleitung 26 des ersten Steuereingangs 20 des pneumatisch steuerbaren Wegeventils 18 ist dann mit der Atmosphäre verbunden, so daß in der Steuerleitung 26 der Druck abfällt. Da in der Steuerleitung 28 des zweiten Steuereingangs 22 des pneumatisch steuerbaren Wegeventils 18 der Druck nicht abfällt (man beachte, daß das 3/2-Wegeventil auch im anderen Schaltzustand die Steuerleitung 28 zur Atmosphäre sperrt), wird das pneumatisch steuerbare Wegeventil 18 entgegen der Rückstellkraft der Rückstellfeder 24 von dem in der Figur 1 gezeigten Schaltzustand in den anderen Schaltzustand überführt. Die Luftfeder 8 ist dann über die Drossel 16, das Restdruckhalteventil 12 und den Lufttrockner 6 mit der Atmosphäre verbunden. Beim Entleeren der Luftfeder 8 wird der Luftrockner 6 im Regenerationsbetrieb betrieben. Die Luftfeder 8 kann nur bis zu einem Restdruck entleert werden, der durch das regelbare Restdruckhalteventil 12 vorgegeben wird.

Soll die Luftfeder 8 nicht weiter entleert werden, so wird von der Steuereinheit 2 das elektrisch steuerbare 3/2 -Wegeventil 30 stromlos geschaltet, so daß es wiederum den in der Figur 1 gezeigten Schaltzustand annimmt. Unmittelbar nachdem dieser Schaltzustand angenommen worden ist, liegt in der Steuerleitung 26 des ersten Steuereingangs 20 der gleiche Luftdruck an wie in der Steuerleitung 28 des zweiten Steuereingangs 22, so daß an den Steuereingängen 20 und 22 Druckgleichgewicht herrscht. Durch die Rückstellkraft der Rückstellfeder 24 geht das pneumatisch steuerbare Wegeventil 18 dann in den in der Figur 1 gezeigten Schaltzustand über. Die Niveauregeleinrichtung befindet sich wieder im Grundzustand und steht für ein erneutes Auffüllen bzw. Entleeren der Luftfeder 8 bereit.

Da das Wegeventil 18 als pneumatisch steuerbares Wegeventil ausgebildet ist, kann es über einen hohen Strömungsquerschnitt verfügen und infolgedessen kann der Lufttrockner 6 im Regenerationsbetrieb schnell entlüftet werden. Somit ist auch bei ungünstigen Betriebsbedingungen der Niveauregeleinrichtung eine gute Regeneration des Lufttrockners 6 gewährleistet.

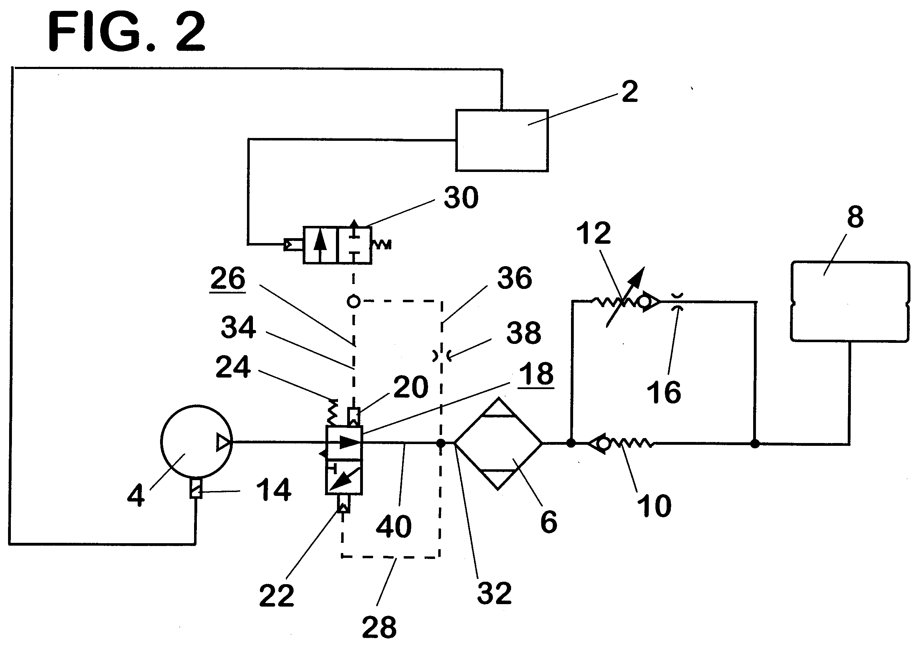

Figur 2 zeigt eine Niveauregeleinrichtung für Fahrzeuge mit Luftfedern 8, die weitgehend genauso aufgebaut ist wie die in der Figur 1 gezeigte Niveauregeleinrichtung. Lediglich der Aufbau zwischen dem Kompressor 4 und dem Lufttrockner 6 ist anders. Bei der in der Figur 2 gezeigten Niveauregeleinrichtung sind die steuerbaren Wegeventile 18 und 30 so geschaltet, daß die Niveauregeleinrichtung ihren Grundzustand einnimmt. Das Auffüllen der Luftfeder 8 mit Hilfe des Kompressors 4 geschieht genauso, wie es bereits im Zusammenhang mit der Figur 1 beschrieben worden ist, so daß an dieser Stelle nicht noch einmal darauf eingegangen werden soll.

Zum Entleeren der Luftfeder 8 wird zunächst von der Steuereinheit 2 das elektrisch steuerbare 2/2-Wegeventil 30 angesteuert, so daß dieses von dem in der Figur 2 gezeigten Schaltzustand in seinen anderen Schaltzustand übergeht. Der erste Teil 34 der Steuerleitung 26, der auf den Steuereingang 20 führt, ist dann direkt mit der Atmosphäre verbunden, so daß sich am Steuereingang 20 sofort der Atmosphärenluftdruck einstellt. Da an dem zweiten Steuereingang 22 ein höherer Druck anliegt, geht das pneumatisch steuerbare Wegeventil 18 von dem in der Figur 2 gezeigten Schaltzustand in den anderen Schaltzustand über. Die Luftfeder 8 ist dann über die Drossel 16, das Restdruckhalteventil 12 und den Kompressor 6 mit der Atmosphäre verbunden. Da auch der zweite Teil 36 der Steuerleitung des ersten Steuereingangs 20 und die Steuerleitung 28 über das steuerbare Wegeventil 30 mit der Atmosphäre verbunden ist, strömt beim Entleeren der Luftfeder 8 eine geringe Luftmenge über diesen Weg in die Atmosphäre. Die Drossel 38 in dem zweiten Teil 36 der Steuerleitung 26 bewirkt während der Strömung einen Druckabfall in Strömungsrichtung, so daß aufgrund dieses Druckabfalls der Druck, der auf den Steuereingang 20 wirkt, immer kleiner ist als der Druck, der auf den Steuereingang 22 wirkt. Aus diesem Grunde nimmt das pneumatisch steuerbare Wegeventil 18 beim Entleeren der Luftfeder 8 einen stabilen Schaltzustand ein.

Soll die Luftfeder 8 nicht weiter entleert werden, so wird von der Steuereinheit 2 das elektrisch steuerbare Wegeventil 30 zunächst stromlos geschaltet, so daß dieses wiederum den in der Figur 2 gezeigten Schaltzustand annimmt. Nach kurzer Zeit stellt sich dann in der ersten Steuerleitung 26 der gleiche Luftdruck ein wie in der zweiten Steuerleitung 28, so daß auf die Steuereingänge 20 und 22 die gleichen Luftdrücke wirken. Aufgrund der Rückstellkraft der Rückstellfeder 24 nimmt das pneumatisch steuerbare Wegeventil 18 dann wieder den in der Figur 2 gezeigten Schaltzustand ein und die Niveauregeleinrichtung geht wieder in ihren Grundzustand über.

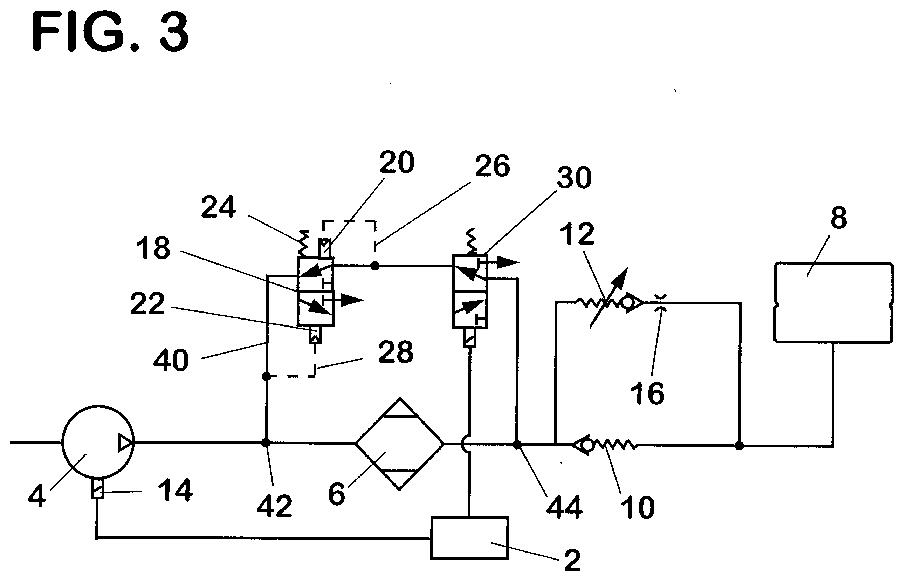

Figur 3 zeigt in schematischer Darstellung ebenfalls eine Niveauregeleinrichtung für ein Fahrzeug mit Luftfedern 8, wobei die steuerbaren Wegeventile 18 und 30 so geschaltet sind, daß sich die Niveauregeleinrichtung im Grundzustand (in der Beschreibungseinleitung als erster Schaltzustand bezeichnet) befindet (d. h. die Luftfedern 8 werden weder gefüllt noch entleert). In dem in der Figur 3 gezeigten Ausführungsbeispiel wird der Lufttrockner 6 durch die druckbeaufschlagbare Leitung 40 überbrückt, d. h. die druckbeaufschlagbare Leitung 40 zweigt in einem Punkt 42, der zwischen dem Kompressor 4 und dem Lufttrockner 6 liegt, von der Leitung, die zu den Luftfedern 8 führt, ab und wird hinter dem Lufttrockner 6 in einem Punkt 44 wieder auf die Leitung, die zu den Luftfedern 8 führt, geführt. In der druckbeaufschlagbaren Leitung befinden sich die Steuerventile 18 und 30. Die Steuereingänge 20 und 22 des pneumatisch steuerbaren Wegeventils 18 sind über Steuerleitungen 26 bzw. 28 mit der druckbeaufschlagbaren Leitung 40 verbunden. Im Grundzustand der Niveauregeleinrichtung liegt an den Steuereingängen 20 und 22 der gleiche Luftdruck an und das pneumatisch steuerbare Wegeventil 18 wird durch die Rückstellfeder 24 stabil im Grundzustand (d. h. im ersten Schaltzustand) fixiert.

Soll die Luftfeder 8 gefüllt werden, so schickt die Steuereinheit 2 ein Steuersignal an den Steuereingang 14 des Kompressors, woraufhin dieser anfängt zu laufen. Die Luftfeder 8 wird dann über den Lufttrockner 6 und das Rückschlagventil 10 aufgefüllt. Hierbei läuft der Lufttrockner 6 im Trocknungsbetrieb. Soll der Auffüllvorgang beendet werden, so ergeht wiederum ein Signal von der Steuereinheit 2 an den Steuereingang 14 des Kompressors, woraufhin dieser aufhört zu laufen. Beim Befüllen der Luftfeder 8 nehmen die steuerbaren Wegeventile 18 und 30 den in der Figur gezeigten Grundzustand ein. Ferner wird beim Befüllen der Luftfeder ausschließlich Luft von dem Kompressor 4 über den Lufttrockner 6 und das Rückschlagventil 10 in die Luftfeder 8 geführt. Eine Führung der Luft von dem Kompressor 4 über die druckbeaufschlagbare Leitung 40, die den Lufttrockner 6 überbrückt, ist nicht möglich, da das pneumatisch steuerbare Wegeventil 18 so ausgebildet ist, daß eine Luftströmung von dem dem Kompressor 4 zugewandten Teil der druckbeaufschlagbaren Leitung 40 zu dem der Luftfeder 8 zugewandten Teil der druckbeaufschlagbaren Leitung 40 ausgeschlossen ist (angedeutet durch den Pfeil in dem oberen Kästchen des pneumatisch steuerbaren Wegeventils 18, der von der Luftfeder 8 in Richtung des Kompressors 4 weist; analoges gilt für das steuerbare Wegeventil 30).

Soll die Luftfeder 8 entleert werden, so wird durch die Steuereinheit 2 der Steuereingang des elektrisch steuerbaren 3/2-Wegeventils 30 angesteuert, so daß dieses von dem in der Figur 3 gezeigten Schaltzustand in den anderen Schaltzustand übergeht. Die Steuerleitung 26 des ersten Steuereingangs 20 des pneumatisch steuerbaren Wegeventils 18 ist dann mit der Atmosphäre verbunden, so daß in der Steuerleitung 26 der Druck abfällt. Da in der Steuerleitung 28 des zweiten Steuereingangs 22 des pneumatisch steuerbaren Wegeventils 18 der Druck nicht abfällt (man beachte, daß das 3/2-Wegeventil auch im anderen Schaltzustand die Steuerleitung 28 zur Atmosphäre sperrt), wird das pneumatisch steuerbare Wegeventil 18 entgegen der Rückstellkraft der Rückstellfeder 24 von dem in der Figur 3 gezeigten Schaltzustand in den anderen Schaltzustand überführt. Die Luftfeder 8 ist dann über die Drossel 16, das Restdruckhalteventil 12 und den Lufttrockner 6 und das pneumatisch steuerbare Wegeventil 18 mit der Atmosphäre verbunden. Beim Entleeren der Luftfeder 8 wird der Lufttrockner auch hier im Regenerationsbetrieb betrieben. Die Luftfeder 8 kann nur bis zu einem Restdruck entleert werden, der durch das einstellbare Restdruckhalteventil 12 vorgegeben wird.

Soll die Luftfeder 8 nicht weiter entleert werden, so wird von der Steuereinheit 2 das elektrisch steuerbare 3/2-Wegeventil 30 stromlos geschaltet, so daß es wiederum den in der Figur 3 gezeigten Schaltzustand annimmt. Nachdem dieser Schaltzustand angenommen worden ist, liegt in der Steuerleitung 26 des ersten Steuereingangs 20 der gleiche Luftdruck an wie in der Steuerleitung 28 des zweiten Steuereingangs 22, so daß an den Steuereingängen 20 und 22 Druckgleichgewicht herrscht. Durch die Rückstellkraft der Rückstellfeder 24 geht das pneumatisch steuerbare Wegeventil 18 dann in den in der Figur 3 gezeigten Schaltzustand über. Die Niveauregeleinrichtung befindet sich wieder im Grundzustand und steht für ein erneutes Auffüllen bzw. Entleeren der Luftfeder 8 bereit.

Bei dem in der Figur 3 gezeigten Ausführungsbeispiel liegt die Verzweigung 44, in der die druckbeaufschlagbare Leitung 40 endet, zwischen dem Lufttrockner 6 und dem Rückschlagventil 10. Im statischen Druckgleichgewicht (also in dem in der Figur 3 gezeigten Grundzustand der Niveauregeleinrichtung) liegt an den Steuereingängen 20 und 22 des pneumatisch steuerbaren Wegeventils 18 der Druck der Luftfeder 8 an. Das pneumatisch steuerbare Wegeventil 18 kann also mit Hilfe des Luftdruckes der Luftfeder von dem in der Figur 3 gezeigten ersten Schaltzustand in den zweiten Schaltzustand überführt werden, wenn die Steuerleitung 26 mit Hilfe des steuerbaren Wegeventils 30 zur Atmosphäre hin entlüftet wird (s. oben). Beim Schaltvorgang von dem zweiten Schaltzustand in den in der Figur 3 gezeigten ersten Schaltzustand muß sich am Steuereingang 20 des pneumatisch steuerbaren Wegeventils 18 erst ein Druck aufbauen, der ausreichend groß ist, um das Wegeventil 18 von dem zweiten Schaltzustand mit Hilfe des Luftdruckes und der Rückstellfeder 24 in den ersten Schaltzustand zu überführen. Dies kann aufgrund der Drossel 16, an der der Druck aus der Luftfeder 8 abfällt, eine Zeitspanne in Anspruch nehmen, wodurch sich der Schaltvorgang verzögert.

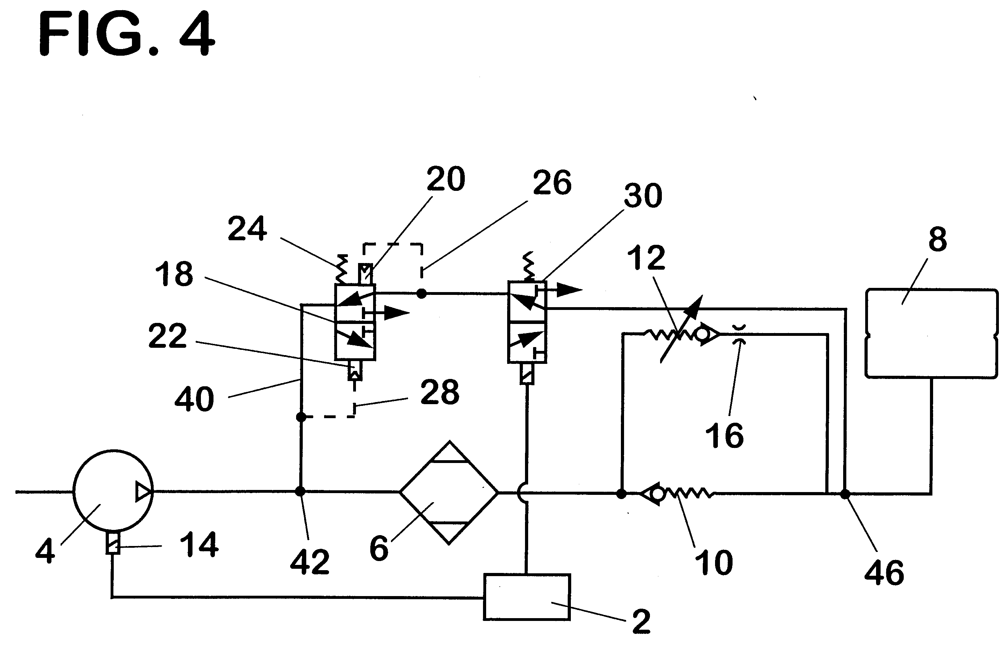

Gemäß einer Weiterbildung des Ausführungsbeispiels nach Figur 3 wird das Ende der druckbeaufschlagbaren Leitung 40 in die Verzweigung 46 (s. Figur 4) gelegt, in dem immer der volle Luftdruck der Luftfeder 8 anliegt. Beim Schaltvorgang des pneumatisch steuerbaren Wegeventils 18 vom zweiten Schaltzustand in den ersten Schaltzustand wird in diesem Fall die Luft aus der Luftfeder 8 nicht über die Drossel 16 geführt, so daß dementsprechend keine Druckverluste auftreten und sich somit der volle Luftdruck an dem Steuereingang 20 des Wegeventils 18 sofort einstellt. Dadurch kann die Schaltzeit an dem pneumatisch steuerbaren Wegeventil 18 verkürzt werden.

### Bezugszeichenliste

- 2: Steuereinheit
- 4: Kompressor
- 6: Lufttrockner
- 8: Luftfeder
- 10: Rückschlagventil
- 12: Restdruckhalteventil
- 14: Steuereingang des Kompressors
- 16: Drossel
- 18: pneumatisch steuerbares Wegeventil
- 20: erster Steuereingang
- 22: zweiter Steuereingang
- 24: Rückstellfeder
- 26: Steuerleitung des ersten Steuereinganges
- 28: Steuerleitung des zweiten Steuereinganges
- 30: steuerbares Wegeventil
- 32: Eingang des Lufttrockner
- 34: erste Teil der Steuerleitung 26
- 36: zweite Teil der Steuerleitung 26
- 38: Drossel
- 40: Leitung
- 42, 44, 46: Verzweigung

## Patentansprüche

1. Niveauregeleinrichtung für Fahrzeuge mit Luftfedern (8), durch die ein Fahrzeugaufbau gegenüber mindestens einer Federachse abgefedert ist, wobei
- jede Luftfeder (8) zum Auffüllen über einen Lufttrockner (6) mit einer Druckluftquelle (4) verbindbar ist,
- jede Luftfeder (8) zum Entleeren über den Lufttrockner (6) mit der Atmosphäre verbindbar ist,
**dadurch gekennzeichnet,** daß
- ein pneumatisch steuerbares Wegeventil (18) vorhanden ist, das einen ersten oder einen zweiten Schaltzustand einnehmen kann, wobei es in dem zweiten Schaltzustand die Atmosphäre mit dem Lufttrockner (6) verbindet und
- das pneumatisch steuerbare Wegeventil (18) einen ersten (20) und einen zweiten Steuereingang (22) aufweist, die jeweils über eine Steuerleitung (26, 28) mit einer druckbeaufschlagbaren Leitung (40) verbunden sind, wobei das pneumatisch steuerbare Wegeventil (18) mit einer Rückstellfeder (24) beaufschlagt ist, die das pneumatisch steuerbare Wegeventil (18) bei Druckgleichheit in den Steuerleitungen (26, 28) in dem ersten Schaltzustand fixiert und
- die Steuerleitung (26) des ersten Steuereingangs (20) mit der Atmosphäre verbindbar ist, wobei das pneumatisch steuerbare Wegeventil (18) in den zweiten Schaltzustand übergeht, wenn die Steuerleitung (26) mit der Atmosphäre verbunden ist.

2. Niveauregeleinrichtung nach Anspruch 1, dadurch gekennzeichnet, daß das pneumatische steuerbare Wegeventil (18) zwischen der Druckluftquelle (4) und dem Lufttrockner (6) angeordnet ist, und in einem ersten Schaltzustand die Druckluftquelle (4) mit dem Lufttrockner (6) verbindet und in einem zweiten Schaltzustand die Atmosphäre mit dem Lufttrockner (6) verbindet.

3. Niveauregeleinrichtung nach Anspruch 1, dadurch gekennzeichnet, daß die druckbeaufschlagbare Leitung (40) den Lufttrockner (6) überbrückt und daß das pneumatisch steuerbare Wegeventil (18) in der druckbeaufschlagten Leitung (40) angeordnet ist und in einem Schaltzustand die Atmosphäre mit dem Lufttrockner (6) verbindet.

4. Niveauregeleinrichtung nach einem der Ansprüche 2 bis 3, dadurch gekennzeichnet, daß die Steuerleitung (26) des ersten Steuereingangs (20) über ein steuerbares 3/2-Wegeventil (30) in einer ersten Schaltstellung mit der Atmosphäre bzw. in einer zweiten Schaltstellung mit der druckbeaufschlagten Leitung (40) verbindbar ist.

5. Niveauregeleinrichtung nach Anspruch 2, dadurch gekennzeichnet, daß die Steuerleitung (26) des ersten Steuereingangs (20) zwei Teile (34), (36) aufweist, von denen der erste Teil (34) auf den ersten Steuereingang (20) führt und über ein steuerbares 2/2-Wegeventil direkt mit der Atmosphäre verbindbar ist und der zweite Teil (36) über eine Drossel (38) mit der druckbeaufschlagten Leitung (40) verbindbar ist.

6. Niveauregeleinrichtung nach einem der Ansprüche 1 bis 5, dadurch gekennzeichnet, daß zwischen der Luftfeder (8) und dem Lufttrockner (6) ein Restdruckhalteventil (12) angeordnet ist, über das die Luftfeder (8) zum Entleeren mit dem Lufttrockner (6) verbunden wird.

7. Niveauregeleinrichtung nach einem der Ansprüche 1 bis 6, dadurch gekennzeichnet, daß die druckbeaufschlagte Leitung (40), auf die die freien Enden der Steuerleitungen (26) bzw. (28) führen, den Lufttrockner (6) mit dem pneumatisch steuerbaren Wegeventil (18) verbindet.
